# EUROPEAN PATENT SPECIFICATION

(11) **EP 4 423 585 B1**
(45) Date of publication and mention of the grant of the patent: **20.08.2025**
(21) Application number: 22809190.6
(22) Date of filing: 24.10.2022
(51) Int. Cl.: G05D 23/02, F24D 19/10

(54) **THERMOSTATIC HEAD FOR A FLOW CONTROL VALVE IN A HEATING SYSTEM**
THERMOSTATKOPF FÜR EIN DURCHFLUSSREGELVENTIL IN EINEM HEIZSYSTEM
TÊTE THERMOSTATIQUE POUR VANNE DE RÉGULATION DE DÉBIT DANS SYSTÈME DE CHAUFFAGE

(30) Priority: 25.10.2021 IT 202100027350
(43) Date of publication of application: 04.09.2024
(73) Proprietor: R.B.M. S.p.A., 25060 Polaveno (BS) (IT)
(72) Inventor: BOSSINI, Guido, 25075 NAVE (BS) (IT)
(74) Representative: Studio Torta S.p.A.
(86) International application number: PCT/IB2022/060194
(87) International publication number: WO 2023/073529

(56) References cited:
- EP-A1- 3 054 365
- DE-A1- 2 405 488

## Description

### Technical field

The present invention relates to a thermostatic head for a flow control valve in a heating system.

### Background art

Examples of thermostatic heads comprising the features of the preamble of claim 1 are disclosed in EP3054365A1 and DE2405488A1.

As is known, a thermostatic head is a thermoregulation element connectable to a thermostatic valve, which is a control valve having the function of regulating the flow of hot water of a heating system inside a radiant element (such as a radiator) and the resulting exchange of thermal energy of the radiant element with the environment in which it is installed.

The thermostatic head comprises a base body defining an axis and connectable to the thermostatic valve (for example via a ring nut, a quick coupling or a bayonet coupling), a knob rotatable with respect to the base body and operable by a user, and a thermostatic bulb placed inside the knob and communicating with the environment via slots present on the knob.

The bulb internally comprises a thermosensitive medium, via which it exerts a thrust on an actuation element of the thermostatic valve to vary the flow of hot water as a function of the room temperature.

In addition to allowing the aforementioned fluidic communication of the bulb with the environment, the knob also allows a pre-regulation temperature to be set, as it is helically coupled (via a thread) to the base body. Therefore, a rotation of the knob, by the user, simultaneously results in an axial movement thereof. Since the bulb is rigidly coupled to the knob, it also rotates and moves in axial direction. In other words, the knob and the bulb roto-translate together with respect to the base body.

Axial movement of the bulb is desirable, as it defines a starting position (moving it axially towards or away from the base body) which allows the pre-regulation. In particular, the lower the pre-regulation temperature selected by the operator via rotation of the knob, the smaller the axial distance between the bulb and the base body (and thus between the bulb and the thermostatic valve), the lower the flow of hot water to the radiant element.

Vice versa, axial movement of the knob is not desirable, as it modifies the aesthetics and the geometry of the thermostatic head, increasing or reducing its external dimensions.

Rigid coupling between the bulb and the knob also involves disadvantages from a constructive and logistical point of view, linked to the fact that thermostatic heads "customized" for different customers are produced in a same production line. Customization of the thermostatic head is typically concentrated on the knob, which can have different shapes and dimensions, and have on an outer surface thereof various distinctive marks (for example obtainable via laser treatment).

Assembly of the thermostatic head comprises a first step in which the bulb is inserted inside the knob and fitted thereto (for example via a ring nut). Subsequently, a thrust transmission element is inserted. Finally, the base body is coupled to the knob.

Therefore, in order to start the assembly cycle of the thermostatic head, it is necessary to already have the customized knob. Furthermore, a large number of different components must be managed from the start of the assembly cycle, due to the plurality of possible knobs.

A purpose of the present invention is to provide a thermostatic head which can overcome the above problems.

### Disclosure of the invention

The aforementioned purpose is achieved by a thermostatic head as claimed in claim 1.

### Brief description of the drawings

For a better understanding of the present invention, a preferred embodiment is described below, by way of nonlimiting example and with reference to the accompanying drawings, wherein:
- Figure 1 is a perspective view of a thermostatic head according to the present invention;
- Figure 2 is an exploded perspective view of the thermostatic head of Figure 1;
- Figure 3 is an axial cross-sectional front view of the thermostatic head of Figure 1;
- Figure 4 is a bottom perspective view from of a component of the thermostatic head of Figure 1;
- Figure 5 is a top view of a further component of the thermostatic head of Figure 1;
- Figures 6 and 7 are respectively a front and perspective view of the component of Figure 5;
- Figure 8 is a perspective view of a further component of the thermostatic head of Figure 1;
- Figures 9 and 10 illustrate subsequent steps of an assembly cycle of the thermostatic head of Figure 1; and
- Figure 11 is an axial cross-sectional front view of the thermostatic head according to a variant of embodiment.

### Detailed description of the invention

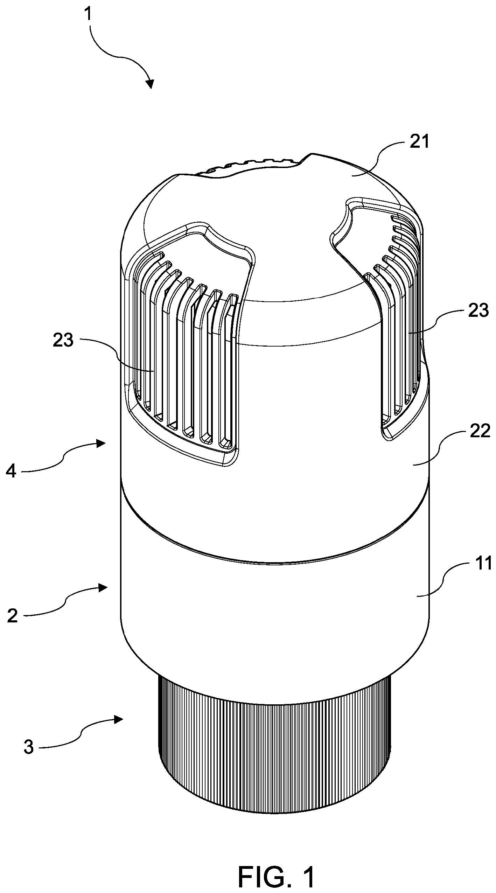

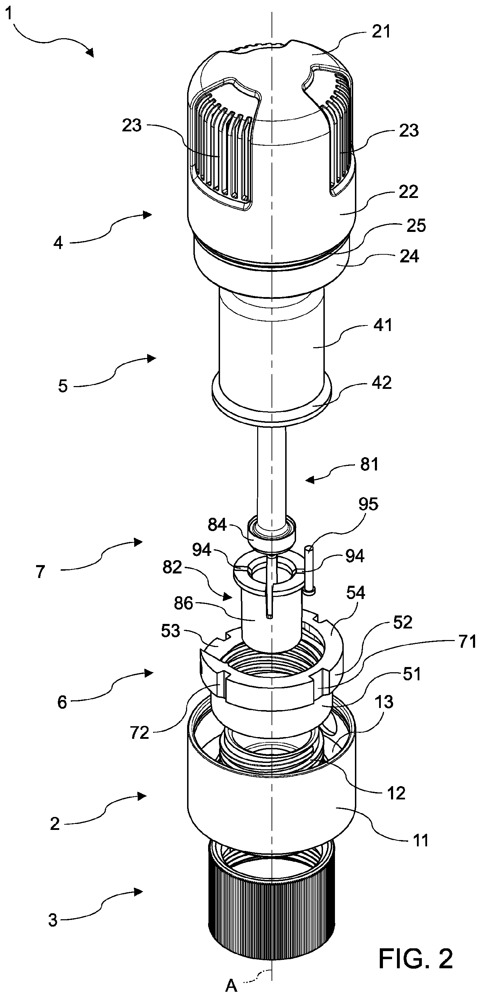

With reference to Figures 1 and 2, there is indicated by 1 a thermostatic head according to the present invention. The thermostatic head 1 is configured to cooperate with a flow control valve (not illustrated) in a heating system. The valve is conveniently of the normally open type, i.e. it is provided with a return spring that maintains it in open condition in the absence of external actuations.

The thermostatic head 1 comprises a base body 2 provided with connection means 3 to the valve, a knob 4 rotoidally coupled to the base body 2, a bulb 5 inserted into the knob 4, an intermediate body 6 interposed between the base body 2 and the bulb 5, and motion transmission means 7 at least partially inserted into the base body 2 and into the bulb 5.

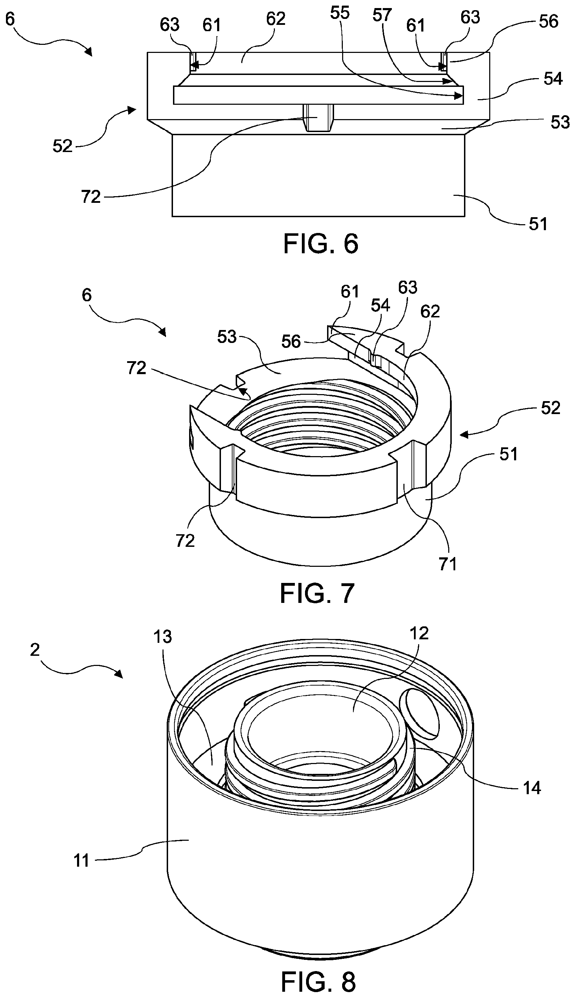

The base body 2 (Figure 8) is substantially cylindrical and comprises an outer cylindrical wall 11 of axis A and an inner cylindrical body 12, coaxial to the cylindrical wall 11 and connected thereto by an axially intermediate radial annular wall 13. The inner cylindrical body 12 comprises a first externally threaded portion 14 extending in the opposite direction with respect to the valve and a second portion 15 extending towards the valve.

The base body 2 is connectable to the valve via the connection means 3, such as a ring nut of axis A interposed between the base body 2 and the valve, and comprising an inner thread. In this case, the second portion 15 of the inner cylindrical body 12 has a terminal outer prominence cooperating with the ring nut 3 and configured to couple in a snap-on manner therewith. Alternatively, the connection means 3 can be, for example, a quick coupling or a bayonet coupling.

The knob 4 is substantially cup-shaped extending along the axis A, and comprises a convex base wall 21 and a tubular wall 22 with an axis A which joins the base wall 21. At least one of the base wall 21 and the tubular wall 22 has slots 23 (for example linear or circular) to allow fluidic communication of the bulb 5, inserted into the knob 4, with the environment outside the knob 4. In the illustrated example, the knob 4 has three groups of slots 23 angularly equispaced, wherein each slot 23 extends radially in proximity of a circumferential edge of the base wall 21 and continues axially along a portion of the tubular wall 22 adjoining the base wall 21.

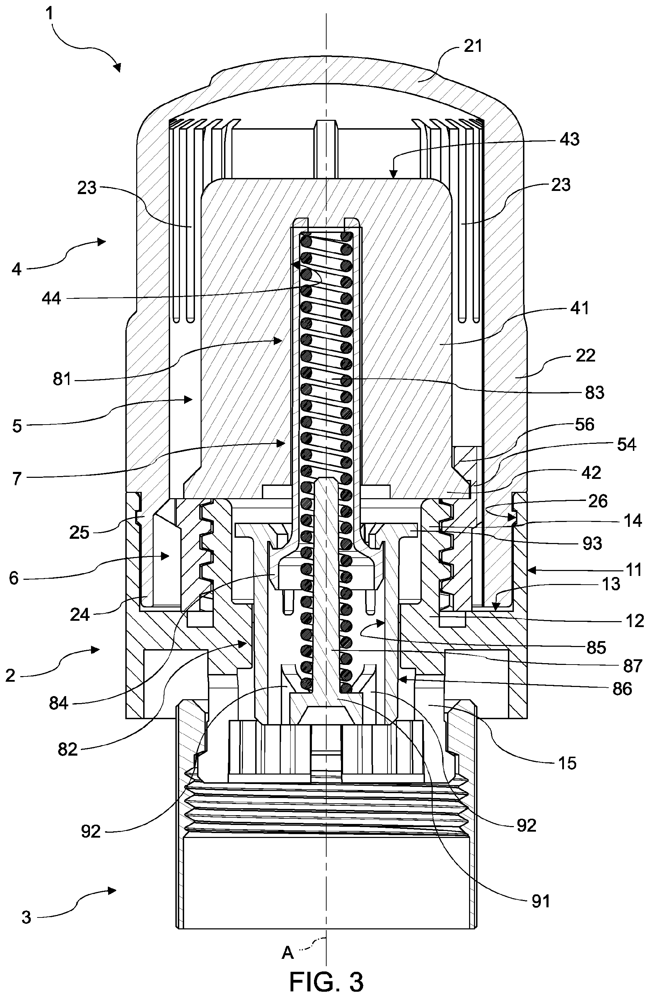

The base body 2 and the knob 4 (Figure 3) have substantially equal outer diameters. In order to couple together, the tubular wall 22 of the knob 4 has, on the opposite side with respect to the base wall 21, a terminal portion 24 with a smaller outer diameter having an outer circumferential rib 25 configured to engage with a respective inner circumferential groove 26 of the cylindrical wall 11 of the base body 2. Therefore, the knob 4 is rotatable with respect to the base body 2, but axially constrained thereto.

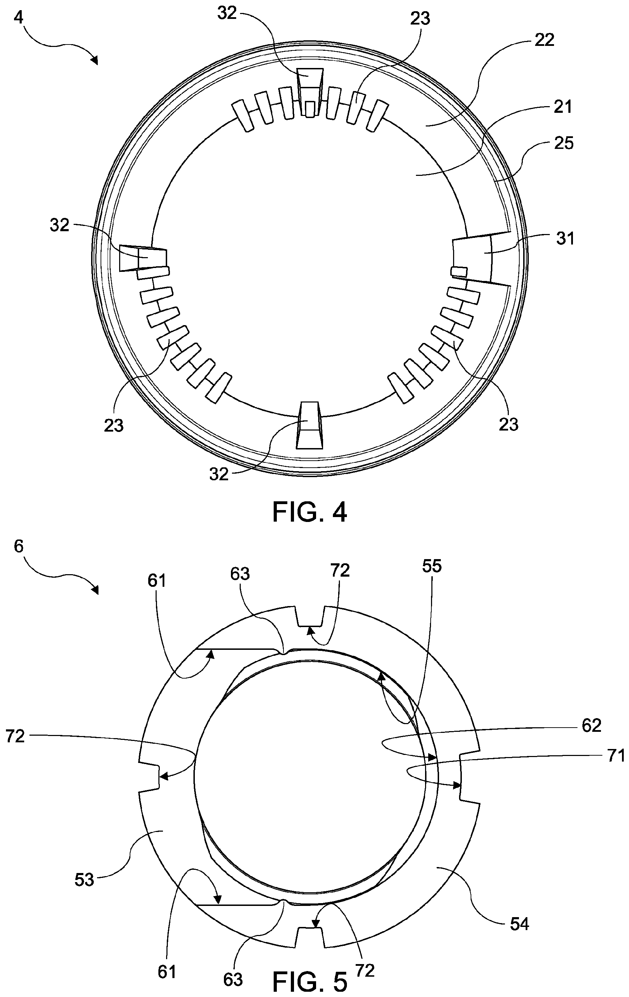

The tubular wall 22 of the knob 4 (Figure 4) is provided internally with a main axial rib 31 extending up to a free end of the terminal portion 24. The tubular wall 22 of the knob 4 optionally has one or more inner secondary axial ribs 32, of smaller length with respect to the main axial rib 31, which do not extend up to the free end of the terminal portion 24. In the illustrated example, the tubular wall 22 of the knob 4 has three secondary axial ribs 32 having radially a smaller angular width with respect to the main axial rib 31, and the four ribs are angularly equispaced.

The bulb 5 is substantially a cylinder of axis A internally comprising a thermosensitive medium, such as (in increasing order of response speed) thermosensitive wax, thermosensitive liquid or thermosensitive gas. The thermosensitive medium expands when the temperature of the environment, with which the bulb 5 is in fluidic communication, increases.

The bulb 5 comprises a main body 41 and a flange 42. The main body 41 is a cylinder of axis A, having a chamfered base 43, which faces the base wall 21 of the knob 4, and provided with the perimeter flange 42 at an end thereof opposite the base 43. The bulb 5 (Figure 3) has a blind axial cavity 44 open on the side of the flange 42.

The intermediate body 6 (Figures 5-7) is substantially a hollow cylinder of axis A, radially interposed between the terminal portion 24 of the knob 4 and the first portion 14 of the inner cylindrical body 12 of the base body 2. The intermediate body 6 comprises a tubular element 51 and a fastening portion 52.

The tubular element 51 (Figure 7) is internally threaded and screws onto the first portion 14 of the inner cylindrical body 12 of the base body 2. The annular wall 13 of the base body 2 defines an axial stop for the tubular element 51.

The fastening portion 52 comprises an annular flange 53 extending externally from an axial end of the tubular element 51 opposite the annular wall 13 of the base body 2.

The fastening portion 52 further comprises a U-shaped appendage 54 axially extending from the flange 53.

The appendage 54 laterally delimits a cavity 55 open in radial direction and has an inner prominence 56 defining a minimum width of the cavity 55 substantially equal to the diameter of the main body 41 of the bulb 5.

The inner prominence 56 is axially spaced with respect to a head surface of the flange 53 so as to define therewith a seat 57 configured to accommodate the flange 42 of the bulb 5. The inner prominence 56 is internally delimited by two flat surfaces 61 facing each other and by a semi-cylindrical surface 62 joining them. The flat surfaces 61 have respective teeth 63 having a substantially cusp-shaped cross-section and facing each other.

The fastening portion 52 of the intermediate body 6 (Figure 5) has externally a main axial groove 71 having a shape complementary to the main axial rib 31 of the tubular wall 22 of the knob 4. The fastening portion 52 of the intermediate body 6 optionally has outer secondary axial grooves 72 cooperating with the secondary axial ribs 32 of the tubular wall 22 of the knob 4. Therefore, the knob 4 and the intermediate body 6 are prismatically coupled, and a rotation of the knob 4 is rigidly transmitted to the intermediate body 6.

The motion transmission means 7 (Figure 2) are substantially a pusher comprising a rod 81 and a piston 82 telescopically mounted with the interposition of a spring 83.

The rod 81, of axis A, is housed in the axial cavity 44 of the main body 41 of the bulb 5 and comprises an annular head 84 of axis A slidably housed in an axial cavity 85 of the piston 82.

The piston 82 comprises a cylindrical lateral wall 86 of axis A, delimiting the axial cavity 85, slidably housed in the inner cylindrical body 12 of the base body 2.

The piston 82 further comprises an axial stem 87 provided, at an axial end thereof facing the valve, with a head 91 connected to the lateral wall 86 via spokes 92 at an axial end thereof facing the valve. The stem 87 has a smaller diameter with respect to an inner diameter of the rod 81 and is configured to be inserted with radial clearance into its cavity. The lateral wall 86 is sized to slidably house the head 84 of the rod 81. In particular, the head 84 is mounted in the lateral wall 86 forcing it through an inner prominence thereof disposed at an end 93 opposite the spokes 92. For this purpose, the end 93 is elastically expandable via a plurality of axial slots 94 angularly equispaced.

The spring 83 is radially interposed between the rod 81 and the stem 87 and is axially pre-compressed between an end shoulder of the rod 81, opposite the head 84 of the rod 81 itself, and the head 91 of the piston 82.

The thermostatic head 1 further comprises an axial pin 95 driven into a through-hole of the annular wall 13 of the base body 2. The pin 95 is sized and positioned to cooperate with the main axial rib 31 of the knob 4 but not with the secondary axial ribs 32, if present. Therefore, the pin 95 allows a stop to the rotation of the knob 4, preventing rotations greater than a round angle.

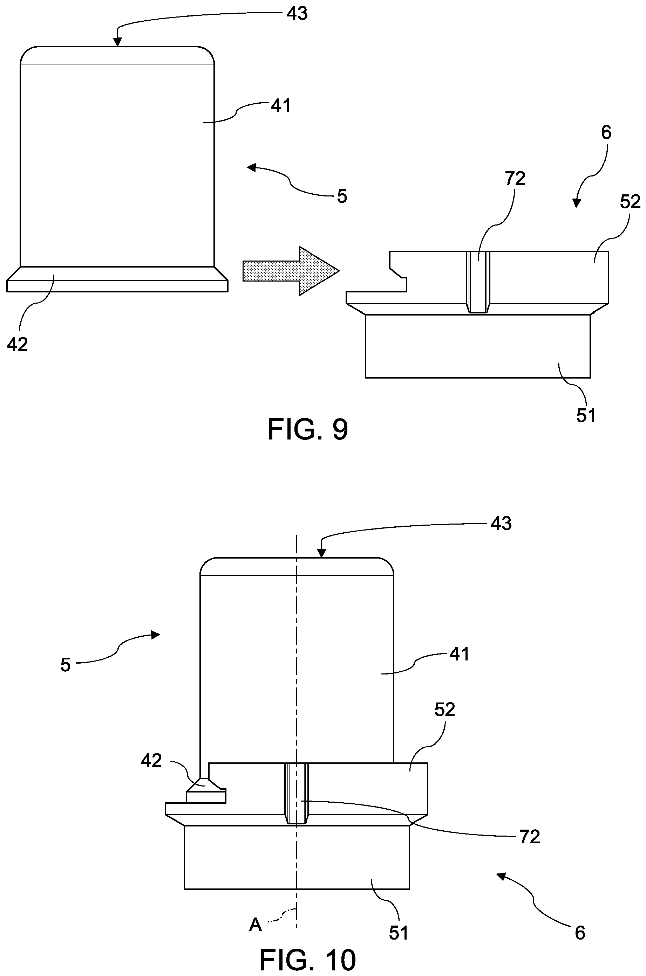

An assembly cycle of the thermostatic head 1 (Figure 9) comprises a step in which the bulb 5 is rigidly coupled to the intermediate body 6.

In particular, the bulb 5 is radially inserted into the fastening portion 52 of the intermediate body 6, so that the flange 42 of the bulb 5 is housed in the seat 57 of the fastening portion 52.

The fastening portion 52 is able to accommodate the bulb 5, and to lock it, thanks to the teeth 63 of the two flat surfaces 61. In particular, the cusp shape of the teeth 63 allows them to slide on the main body 41 of the bulb 5 during its insertion, and to elastically snap at the end thereof, snap-locking the bulb 5 into the intermediate body 6.

Subsequently, the rod 81 of the pusher 7 is passed through the cavity of the intermediate body 6 and inserted into the axial cavity 44 of the main body 41 of the bulb 5.

Subsequently, the base body 2 is screwed to the intermediate body 6 via the respective threads, creating a helical coupling therebetween.

The connection means 3 and the pin 95 can be coupled to the base body 2 before or after the step described above, indifferently.

Finally, the knob 4 is prismatically coupled to the intermediate body 6 (i.e. in an axially free and rotationally fixed manner) and rotoidally to the base body 2 (i.e. in a rotationally free and axially fixed manner).

In particular, the knob 4 and the intermediate body 6 are moved axially towards each other, making the main axial rib 31 of the knob 4 engage with the main axial groove 71 of the intermediate body 6 and, optionally, the secondary axial ribs 32 engage with the secondary axial grooves 72 of the intermediate body 6. Therefore, the prismatic coupling between the knob 4 and the intermediate body 6 is obtained. Furthermore, the circumferential rib 25 of the knob 4 engages with the circumferential groove 26 of the base body 2, thus obtaining rotoidal coupling between the knob 4 and the base body 2.

In use, the operator can set a pre-regulation temperature by rotating the knob 4. In order to facilitate the pre-regulation, a cylindrical outer surface of the terminal portion 24 of the knob 4 can have, along a circumference thereof, marks (numbers and/or pictograms) corresponding to respective pre-regulation positions, in turn corresponding to respective desired room temperatures. In this case, the cylindrical wall 11 of the base body 2 (Figure 8) has a through-hole configured to allow the operator to read, in a sequential manner, such marks. Since the bulb 5 is locked in the body 6, which is in turn prismatically coupled to the knob 4 and helically coupled to the base body 2, the rotation of the knob 4 results in an axial movement of the bulb 5, defining a starting position thereof.

When the room temperature increases, the thermosensitive medium expands, causing an axial thrust of the bulb 5 on the rod 81 of the pusher 7 in the direction of the base body 2. Via the spring 83 and the piston 82 of the pusher 7, the axial thrust of the bulb 5 is transmitted to the valve, which reduces the flow of hot water to the radiant element. Vice versa, when the room temperature decreases, the thermosensitive medium contracts and, in the absence of the axial thrust of the bulb 5, the valve returns towards the open position, increasing the flow of hot water to the radiant element. The spring 83 has the purpose of maintaining the rod 81 in contact with the bulb 5 and the piston 82 in contact with a control element of the valve, absorbing any overtravel of the bulb 5 when the room temperature is above the pre-regulation temperature.

Upon examination of the characteristics of the thermostatic head 1, the advantages of the present invention are clear.

In particular, the knob 4 is rotoidally coupled to the base body 2, while the intermediate body 6 is rigidly coupled to the bulb 5, prismatically coupled to the knob 4, and helically coupled to the base body 2. Therefore, the rotation of the knob 4 around the base body 2 is rigidly transmitted to the intermediate body 6, which rotates with respect to the base body 2 and simultaneously moves in axial direction. Since the bulb 5 is rigidly coupled to the intermediate body 6, it also rotates and moves in axial direction. In other words, the intermediate body 6 and the bulb 5 roto-translate together with the base body 2, while the knob 4 only rotates with respect thereto. Therefore, the axial movement of the knob 4 is eliminated, maintaining the aesthetics and geometry of the thermostatic head 1, which has constant outer dimensions.

The knob 4 is mounted only at the end of the assembly cycle. Therefore, it is not necessary to already have the customized knob 4 to start the assembly cycle, and all its steps (except for the last one) are independent from customization of the knob 4, with clear constructive and logistical advantages. In particular, it is not necessary to manage a large number of different components from the start of the assembly cycle.

Furthermore, rigid coupling between the bulb 5 and the intermediate body 6 is carried out at the beginning of the assembly cycle. Therefore, they can be considered as a single component in all the subsequent steps.

Preferably, the bulb 5 couples to the intermediate body 6 via a snap-on fastening, which is particularly uncomplicated and simple to make. Furthermore, the snap-on fastening avoids the use of an external element for rigid coupling, and allows the use of commercial bulbs 5 without the need to modify them.

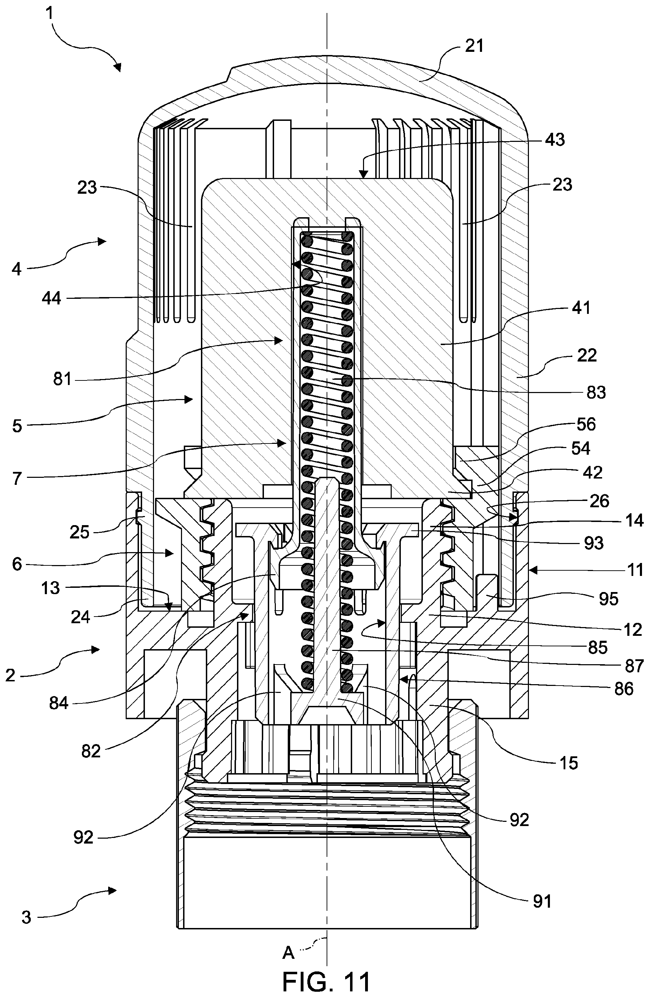

According to a variant illustrated in Figure 11, the pin 95, instead of being an independent component, is in one piece with the base body 2 and extends cantilevered from the wall of the annular wall 13 of the base body 2. This solution, identical from the point of view of operation, is advantageous since it reduces the number of components and simplifies the assembly cycle.

Finally, it is clear that modifications and variations can be made to the thermostatic head 1 without going beyond the scope of protection defined by the claims.

For example, the rigid coupling between the bulb 5 and the intermediate body 6 could be obtained in different ways, e.g. via an axial quick coupling or a bayonet coupling.

## Claims

1. Thermostatic head for a flow control valve in a heating system, comprising a base body (2) provided with connection means (3) to the valve, a knob (4) exposed to an external environment and rotatable with respect to the base body (2) so as to set a pre-regulation temperature, and a thermosensitive element (5) at least partially inserted into the knob (4) and in fluidic communication with the external environment, the thermosensitive element (5) being configured to exert a thrust on the valve as a function of the temperature of the external environment and the pre-regulation temperature, **characterized by** comprising an intermediate body (6) rigidly coupled to the thermosensitive element (5), prismatically coupled to the knob (4) and helically coupled to the base body (2), the knob (4) being axially fixed with respect to the base body (2),
**characterised in that**
the intermediate body (6) is rigidly coupled to the thermosensitive element (5) via a snap-on fastening,
the intermediate body (6) comprises a fastening portion (52) configured to at least partially accommodate and lock the thermosensitive element (5),
the fastening portion (52) has a shape complementary to a portion of the thermosensitive element (5) in contact therewith, and comprises locking means (63) of said portion of the thermosensitive element (5) to the intermediate body (6),
the fastening portion (52) has a cavity (55) open in a radial direction with respect to an axis (A) of the thermostatic head (1) and configured for an insertion into the cavity (55) of said portion of the thermosensitive element (5) in said radial direction.

2. Thermostatic head as claimed in claim 1, wherein the base body (2), the intermediate body (6) and the knob (4) are coaxial to one another.

3. Thermostatic head as claimed in claim 1 or 2, wherein said portion of the thermosensitive element (5) comprises an end perimeter flange (42), the fastening portion (52) being U-shaped so as to laterally delimit the cavity (55) and having an inner prominence (56) delimiting a seat (57) configured to accommodate the flange (42) of the thermosensitive element (5).

4. Thermostatic head as claimed in any of the preceding claims, wherein the locking means (63) comprise teeth disposed on opposite sides of the fastening portion (52) and configured to cooperate in a snap-on manner with the thermosensitive element (5).

5. Thermostatic head as claimed in any of the preceding claims, wherein the knob (4) has at least one opening (23) for the fluidic communication of the thermosensitive element (5) with the external environment.

6. Thermostatic head as claimed in any of the preceding claims, comprising motion transmission means (7) interposed between the thermosensitive element (5) and the valve.

7. Thermostatic head as claimed in any of the preceding claims, wherein the knob (4) comprises at least one internal axial rib (31) and at least one pin (95) rigidly coupled to the base body (2), the at least one pin (95) being configured to cooperate with the at least one rib (31) so as to limit the angle of rotation of the knob (4).

8. Thermostatic head as claimed in claim 7, wherein the at least one pin (95) is integral with the base body (2).

## Patentansprüche

1. Thermostatischer Kopf für ein Durchflussregelventil in einem Heizungssystem, umfassend einen Grundkörper (2), der mit Verbindungsmitteln (3) zu dem Ventil versehen ist, einen Knopf (4), der einer äußeren Umgebung ausgesetzt und in Bezug auf den Grundkörper (2) drehbar ist, um eine Vorregulierungstemperatur einzustellen, und ein wärmeempfindliches Element (5), das zumindest teilweise in den Knopf (4) eingesetzt ist und in Fluidkommunikation mit der äußeren Umgebung steht, wobei das wärmeempfindliche Element (5) so konfiguriert ist, dass es in Abhängigkeit von der Temperatur der äußeren Umgebung und der Vorregulierungstemperatur einen Druck auf das Ventil ausübt, **dadurch gekennzeichnet, dass** er einen Zwischenkörper (6) umfasst, der starr mit dem wärmeempfindlichen Element (5) gekoppelt ist, prismatisch mit dem Knopf (4) gekoppelt ist und schraubenförmig mit dem Grundkörper (2) gekoppelt ist, wobei der Knopf (4) in Bezug auf den Grundkörper (2) axial fixiert ist,
**dadurch gekennzeichnet, dass**
der Zwischenkörper (6) über eine Schnappbefestigung starr mit dem wärmeempfindlichen Element (5) gekoppelt ist,
der Zwischenkörper (6) einen Befestigungsabschnitt (52) umfasst, der dazu konfiguriert ist, das wärmeempfindliche Element (5) zumindest teilweise aufzunehmen und zu verriegeln,
der Befestigungsabschnitt (52) eine Form aufweist, die komplementär zu einem Abschnitt des wärmeempfindlichen Elements (5) ist, der damit in Kontakt steht, und Verriegelungsmittel (63) des Abschnitts des wärmeempfindlichen Elements (5) an dem Zwischenkörper (6) umfasst,
der Befestigungsabschnitt (52) einen Hohlraum (55) aufweist, der in einer radialen Richtung in Bezug auf eine Achse (A) des thermostatischen Kopfes (1) offen ist und für ein Einsetzen in den Hohlraum (55) des Abschnitts des wärmeempfindlichen Elements (5) in der radialen Richtung konfiguriert ist.

2. Thermostatischer Kopf nach Anspruch 1, wobei der Grundkörper (2), der Zwischenkörper (6) und der Knopf (4) koaxial zueinander sind.

3. Thermostatischer Kopf nach Anspruch 1 oder 2, wobei der Abschnitt des wärmeempfindlichen Elements (5) einen Endumfangsflansch (42) umfasst, wobei der Befestigungsabschnitt (52) U-förmig ist, um den Hohlraum (55) seitlich zu begrenzen, und einen inneren Vorsprung (56) aufweist, der einen Sitz (57) begrenzt, der so konfiguriert ist, dass er den Flansch (42) des wärmeempfindlichen Elements (5) aufnimmt.

4. Thermostatischer Kopf nach einem der vorhergehenden Ansprüche, wobei die Verriegelungsmittel (63) Zähne umfassen, die auf gegenüberliegenden Seiten des Befestigungsabschnitts (52) angeordnet und so konfiguriert sind, dass sie mit dem wärmeempfindlichen Element (5) einschnappend zusammenwirken.

5. Thermostatischer Kopf nach einem der vorhergehenden Ansprüche, wobei der Knopf (4) mindestens eine Öffnung (23) für die fluidische Kommunikation des wärmeempfindlichen Elements (5) mit der äußeren Umgebung aufweist.

6. Thermostatischer Kopf nach einem der vorhergehenden Ansprüche, umfassend Bewegungsübertragungsmittel (7), die zwischen dem wärmeempfindlichen Element (5) und dem Ventil angeordnet sind.

7. Thermostatischer Kopf nach einem der vorhergehenden Ansprüche, wobei der Knopf (4) mindestens eine innere axiale Rippe (31) und mindestens einen Stift (95) umfasst, der starr mit dem Grundkörper (2) gekoppelt ist, wobei der mindestens eine Stift (95) konfiguriert ist, um mit der mindestens einen Rippe (31) zusammenzuwirken, um den Drehwinkel des Knopfs (4) zu begrenzen.

8. Thermostatischer Kopf nach Anspruch 7, wobei der mindestens eine Stift (95) einstückig mit dem Grundkörper (2) ausgebildet ist.

## Revendications

1. Tête thermostatique pour une vanne de régulation de débit dans un système de chauffage, comprenant un corps de base (2) pourvu de moyens de connexion (3) à la vanne, un bouton (4) exposé à un environnement extérieur et rotatif par rapport au corps de base (2) de manière à régler une température de pré-régulation, et un élément thermosensible (5) inséré au moins partiellement dans le bouton (4) et en communication fluidique avec l'environnement extérieur, l'élément thermosensible (5) étant configuré pour exercer une poussée sur la vanne en fonction de la température de l'environnement extérieur et de la température de pré-régulation, **caractérisée en ce qu'**elle comprend un corps intermédiaire (6) couplé rigidement à l'élément thermosensible (5), couplé de manière prismatique au bouton (4) et couplé de manière hélicoïdale au corps de base (2), le bouton (4) étant axialement fixe par rapport au corps de base (2),
**caractérisée en ce que**
le corps intermédiaire (6) est couplé rigidement à l'élément thermosensible (5) par l'intermédiaire d'une fixation par encliquetage,
le corps intermédiaire (6) comprend une partie de fixation (52) configurée pour accueillir au moins partiellement et verrouiller l'élément thermosensible (5),
la partie de fixation (52) a une forme complémentaire à une partie de l'élément thermosensible (5) en contact avec elle, et comprend des moyens de verrouillage (63) de ladite partie de l'élément thermosensible (5) au corps intermédiaire (6),
la partie de fixation (52) a une cavité (55) ouverte dans une direction radiale par rapport à un axe (A) de la tête thermostatique (1) et configurée pour une insertion dans la cavité (55) de ladite partie de l'élément thermosensible (5) dans ladite direction radiale.

2. Tête thermostatique selon la revendication 1, dans laquelle le corps de base (2), le corps intermédiaire (6) et le bouton (4) sont coaxiaux entre eux.

3. Tête thermostatique selon la revendication 1 ou 2, dans laquelle ladite partie de l'élément thermosensible (5) comprend une bride périphérique d'extrémité (42), la partie de fixation (52) étant en forme de U de manière à délimiter latéralement la cavité (55) et ayant une protubérance intérieure (56) délimitant un siège (57) configuré pour accueillir la bride (42) de l'élément thermosensible (5).

4. Tête thermostatique selon l'une quelconque des revendications précédentes, dans laquelle les moyens de verrouillage (63) comprennent des dents disposées sur des côtés opposés de la partie de fixation (52) et configurées pour coopérer d'une manière par encliquetage avec l'élément thermosensible (5).

5. Tête thermostatique selon l'une quelconque des revendications précédentes, dans laquelle le bouton (4) présente au moins une ouverture (23) pour la communication fluidique de l'élément thermosensible (5) avec l'environnement extérieur.

6. Tête thermostatique selon l'une quelconque des revendications précédentes, comprenant des moyens de transmission de mouvement (7) interposés entre l'élément thermosensible (5) et la vanne.

7. Tête thermostatique selon l'une quelconque des revendications précédentes, dans laquelle le bouton (4) comprend au moins une nervure axiale interne (31) et au moins une goupille (95) couplée rigidement au corps de base (2), l'au moins une goupille (95) étant configurée pour coopérer avec l'au moins une nervure (31) de manière à limiter l'angle de rotation du bouton (4).

8. Tête thermostatique selon la revendication 7, dans laquelle l'au moins une goupille (95) est solidaire du corps de base (2).
